# EUROPÄISCHE PATENTSCHRIFT

(11) **EP 0 630 841 B1**
(45) Veröffentlichungstag und Bekanntmachung des Hinweises auf die Patenterteilung: **09.10.1996**
(21) Anmeldenummer: 94107172.2
(22) Anmeldetag: 07.05.1994
(51) Int. Cl.: B65G 69/28

(54) **Überladebrücke für Rampen**
Loading bridge for ramps
Pont de chargement pour rampes

(30) Priorität: 18.05.1993 DE 4316549
(43) Veröffentlichungstag der Anmeldung: 28.12.1994
(73) Patentinhaber: Alten, Kurt, D-30974 Wennigsen (DE)
(72) Erfinder: Alten, Kurt, D-30974 Wennigsen (DE)
(74) Vertreter: Depmeyer, Lothar

(56) Entgegenhaltungen:
- EP-A- 0 187 210
- US-A- 4 825 493

## Beschreibung

Die Erfindung betrifft eine Überladebrücke für Rampen mit einer an ihrem rampenseitigen Ende um eine waagerechte Achse verschwenkbaren Brückenplatte, die an ihrem freien Ende mit einer Verlängerung zur Auflage auf der zu be- bzw. entladenden Plattform versehen ist und an beiden Seiten mit senkrechten Schutzblechen versehen ist, die bei hochgeschwenkter Brücke den Spalt zwischen der Brückenplatte und der Rampe überbrücken, wobei an den Schutzblechen ein Vorsprung angeordnet ist, der von einer Ruhestellung hinter den Schutzblechen aus durch die Schutzbleche hindurch in eine Wirkstellung bewegbar ist, in der er seitlich absteht und bei hochgeschwenkter Brückenplatte auf der Rampe aufliegt und die Brückenplatte gegen ungewolltes Absinken sichert (siehe zum Beispiel die EP-A-0 187 210).

Bei bekannten Überladebrücken dieser Ausbildung werden die Vorsprünge von in zwei Endstellungen absicherbaren Querriegeln gebildet, die in einer rohrförmigen Führung angeordnet sind. Eine solche Einrichtung ist vergleichsweise aufwendig, was insb. für die Befestigung der rohrförmigen Führung an den Schutzblechen und die Ausbildung der Querriegel zutrifft.

Aufgrund der Erfindung sollen diese Nachteile vermieden werden, um so eine einfache, aber wirkungsvolle Vorrichtung zu schaffen, mit der die Bückenplatte z.B. bei Inspektions- und Reparaturarbeiten in hochgeschwenkter Stellung fixiert werden kann.

Zur Lösung dieser Aufgabe wird erfindungsgemäss der Vorsprung von einem Schenkel eines Winkels gebildet, dessen anderer Schenkel hinter dem Schutzblech angeordnet und lösbar befestigt ist. Während der den Vorsprung bildende Schenkel die Fixierung der Brückenplatte bewirkt, hat der andere Schenkel die Aufgabe, den Vorsprung in seiner Wirkstellung festzuhalten. Soll dann die Wirkstellung aufgehoben werden, wird der zweite Schenkel vom Schutzblech getrennt und dann kann der andere Schenkel zurückgezogen und in seine Ruhelage hinter dem Schutzblech gebracht werden. Vorzugsweise ist der Winkel ein starres Gebilde z.B. ein Abschnitt eines Winkeleisens mit senkrecht zueinander angeordneten Schenkeln; es ist aber auch möglich, die beiden Schenkel gelenkig miteinander zu verbinden, um die Schenkel hinter dem Schutzblech in der Ruhelage in eine gestreckte, platzsparende Lage zu bringen.

Weitere Einzelheiten der Erfindung werden anhand der Zeichnung erläutert, in der ein Ausführungsbeipiel der Erfindung dargestellt ist. Es zeigen :
Fig. 1 einen Längsschnitt durch eine Überladebrücke für Rampen mit ausgefahrener Verlängerung, jedoch noch in der Ruhestellung befindlicher und somit noch nicht verschwenkter Brückenplatte,
Fig. 2 einen Schnitt nach der Linie II - II von Fig. 1,
Fig. 3 einen Schnitt der Darstellung gemäss Fig. 2 entsprechend, jedoch bei nach oben geschwenkter Brückenplatte ( obere Endstellung ),
Fig. 4 und 6 Darstellung der Fig. 3 entsprechend und
Fig. 5 und 7 den Fig. 4 und 6 zugeordnete Fig., jedoch der Fig. 2 entsprechend.

Die Brückenplatte 1 mit der Verlängerung 2 zum Auflegen auf die zu be- bzw. entladende Plattform ist an ihrem hinteren, brückenseitigen Ende um eine waagerechte Achse 3 an der Rampe 4 gelagert. Die Überladebrücke ist in einer etwa quaderförmigen Ausnehmung 5 der Rampe 4 angeordnet. Versteifungen innerhalb der Ausnehmung 5 sind bei 6 dargestellt.

Die Verlängerung 2 ist an einem längs zur Überladebrücke verfahrbaren Schlitten 7 gelagert. Die Verschwenkung der Brückenplatte 1 erfolgt durch einen unten mittels Rohr 11 und Schelle 12 befestigten Arbeitszylinder 13, der über eine Schelle 14 an einem Rohr 15 der Brückenplatte 1 angreift. Mit Hilfe des Arbeitszylinders 13 kann die Brückenplatte 1 nach oben verschwenkt werden, Abwärtsbewegungen vollführt die Brückenplatte 1 im Regelfalle aufgrund ihres Eigengewichtes.

Für den Fall der Revision und bei Reparaturen und Montagen wird die Brückenplatte nach oben, vorzugsweise in ihre obere Endstellung geschwenkt; in dieser Stellung muss die Brückenplatte 1 abgesichert werden, um die Monteure nicht zu gefährden.

Zu beiden Seiten der Brückenplatte 1 am äussersten Rand dieser Platte sind Schutzbleche 16 befestigt, die sich senkrecht nach unten erstrecken und die Aufgabe haben, den Spalt zwischen der Brückenplatte 1 und der umlaufenden Kante 9 zu überbrücken. Diese Schutzbleche 16 dienen zur Befestigung einer Einrichtung, die der erwünschten Fixierung der Brückenplatte 1 im nach oben geschwenktem Zustand dienen soll.

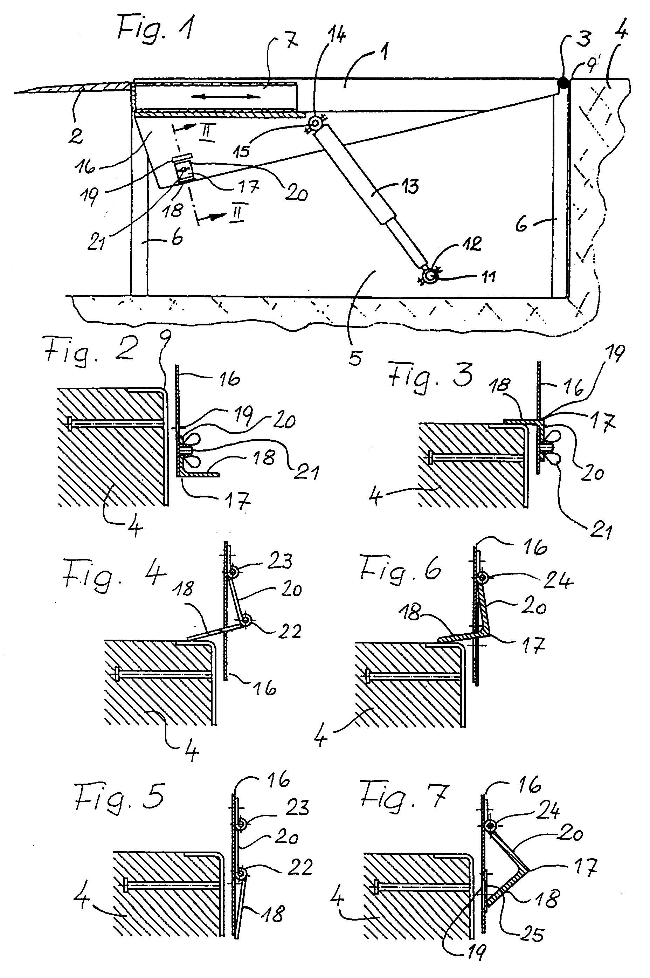

Gemäss Fig. 2 und 3 ist dazu ein Winkeleisen 17 vorgesehen, dessen waagerechter Schenkel 18 eine Bohrung 19 im Schutzblech 16 durchsetzt und seitlich nach aussen absteht, also dort einen Vorsprung bildet, der sich auf der Oberfläche der Rampe 4 im Bereich der Kante 9 abstützen kann und damit die Brückenplatte 1 festhält. Der andere Schenkel 2o liegt innen am Schutzblech 16 an und wird dort durch eine Verschraubung 21 gehalten. Soll die Brückenplatte 1 wieder abgesenkt werden, so wird die Verschraubung 21 gelöst und das Winkeleisen 17 in der Weise gedreht, dass in der Ruhestellung der Schenkel 18 nach innen zeigt ( Fig. 2 ).

Bei der Ausführung gemäss Fig. 4 und 5 sind die beiden Schenkel 18, 2o gelenkig miteinander verbunden, die können in die gestreckte Lage gebracht werden, beschreiben aber in der Wirkstellung gemäss Fig. 4 einen rechten Winkel miteinander , damit so wieder eine Stützung der Brückenplatte 1 stattfinden kann. Das Gelenk ist mit 22 bezeichnet und so beschaffen, dass die beiden Schenkel 18, 2o keinen Winkel miteinander bilden können, der kleiner ist als 9o°. Um die verschiedenen Stellungen des Winkelstückes 17 bewirken zu können, ist das freie Ende des Schenkels 2o seinerseits gelenkig innen an dem Schutzblech 16 befestigt. Das Gelenk ist mit 23 bezeichnet.

Die Ausführung gemäss Fig. 6 und 7 sehen wiederum einen starren Winkel 17 vor, dessen Schenkel 2o am freien Ende mit einem Gelenk 24 am Schutzblech 16 befestigt ist, um den Winkel 16 allein durch eine Klappbewegung in die Wirkstellung bzw. Ruhestellung bringen zu können. Dabei ist der Bohrung 19 ein Schieber 25 zugeordnet, um die Bohrung 19 abdecken zu können, wenn der Winkel 17 seine Ruhestellung gemäss Fig. 7 einnehmen soll.

## Patentansprüche

1. Überladebrücke für Rampen (4) mit einer an ihrem rampenseitigen Ende um eine waagerechte Achse (3) verschwenkbaren Brückenplatte (1), die an ihrem freien Ende eine Verlängerung (2) zur Auflage auf der zu be- bzw. entladenden Plattform und an beiden Seiten mit senkrechten Schutzblechen (16) versehen ist, die bei hochgeschwenkter Brückenplatte (1) den Spalt zwischen der Brückenplatte (1) und der Rampe (4) überbrücken, wobei an den Schutzblechen (16) ein Vorsprung angeordnet ist, der von einer Ruhestellung hinter den Schutzblechen (16) aus durch die Schutzbleche (16) hindurch in eine Wirkstellung bewegbar ist, in der er seitlich absteht und bei hochgeschwenkter Brückenplatte (1) auf der Rampe (4) aufliegt und die Brückenplatte (1) gegen ungewolltes Absinken sichert, dadurch gekennzeichnet, dass der Vorsprung von einem Schenkel (18) eines Winkels (17) gebildet ist, dessen anderer Schenkel (2o) hinter dem Schutzblech (16) angeordnet und lösbar befestigt ist.

2. Brücke nach Anspruch 1, dadurch gekennzeichnet, dass dem an dem Schutzblech (16) befestigten Schenkel (2o) eine Verschraubung (21) zugeordnet ist, deren Schraubelement ( Mutter ) dem zur Aufnahme der Brückenplatte (1) dienenden Ausnehmung (5) in der Rampe zugekehrt ist.

3. Brücke nach Anspruch 1, dadurch gekennzeichnet, dass der Winkel (17) ein Abschnitt eines vorzugsweise gleichschenkligen Winkeleisens mit im rechten Winkel zueinander stehenden Schenkeln ist.

4. Brücke nach Anspruch 1, dadurch gekennzeichnet, dass für die den Vorsprung bildenden Schenkel (18) vorgesehene Bohrung (19) bzw. Ausnehmung im Schutzblech (16) nahe am unteren Rand der Schutzbleche (16) angeordnet ist in der Weise, dass der in der Ruhestellung befindliche Winkel (17) das Schutzblech (16) nicht bzw. nicht nennenswert überragt.

5. Brücke nach Anspruch 1, dadurch gekennzeichnet, dass der Winkel (17) am freien Ende seines anderen Schenkels (2o) innen am Schutzblech (16) angelenkt ist.

6. Brücke nach Anspruch 5, dadurch gekennzeichnet, dass der Winkel (17) von einer Ruhestellung (Fig. 7) aus in die Wirkstellung klappbar ist, wobei der den Vorsprung bildende Schenkel (18) durch das Schutzblech (16) hindurchtritt.

7. Brücke nach Anspruch 1, 6 und 7, dadurch gekennzeichnet, fass die beiden Schenkel (18,2o) gelenkig miteinander verbunden sind, wobei die beiden Schenkel jedoch einen Winkel, der kleiner als etwa 90° ist, nicht miteinander einschliessen können.

8. Brücke nach Anspruch 1, 2 und 3, dadurch gekennzeichnet, dass der andere Schenkel (2o) in der Ruhestellung mit seiner Aussenfläche an der Innenseite des Schutzbleches (16) und in der Wirkstellung mit seiner Innenfläche an der Innenfläche des Schutzbleches (16) anliegt.

9. Brücke nach Anspruch 6, dadurch gekennzeichnet, dass die für den Durchtritt eines Schenkels (18) vorgesehene Bohrung (19) bzw. Ausnehmung im Schutzblech (16) durch einen entfernbaren Deckel bzw. Schieber (25) verschliessbar ist.

## Claims

1. Transfer bridge for platforms (4), having a bridge plate (1) which is pivotable at its platform end about a horizontal axis (3), said bridge plate being provided at its free end with an extension member (2) for support on the deck to be loaded or unloaded and being provided on both sides with vertical protective plates (16), which bridge the gap between the bridge plate (1) and the platform (4) when the bridge plate (1) has been pivoted upwardly, a projection member being disposed on the protective plates (16), which projection member is displaceable from an inoperative position behind the protective plates (16) through the protective plates (16) into an operative position, in which it protrudes laterally, lies on the platform (4) when the bridge plate (1) has been pivoted upwardly and ensures that the bridge plate (1) does not drop accidentally, characterised in that the projection member is formed by a flange (18) of an angle (17), the other flange (20) of said angle being disposed and detachably mounted behind the protective plate (16).

2. Bridge according to claim 1, characterised in that a screw-connection (21) is associated with the flange (20) mounted on the protective plate (16), the screw element (nut) of said screw-connection facing the recess (5) in the platform, which recess serves to accommodate the bridge plate (1).

3. Bridge according to claim 1, characterised in that the angle (17) is a portion of an angle member, which is preferably equal-flanged with flanges lying at right angles to each other.

4. Bridge according to claim 1, characterised in that a bore (19) or recess in the protective plate (16), provided for the flanges (18) forming the projection member, is disposed close to the lower edge of the protective plates (16) in such a manner that the angle (17) in its inoperative position does not, or does not significantly, protrude beyond the protective plate (16).

5. Bridge according to claim 1, characterised in that the angle (17) is pivotally mounted at the free end of its other flange (20) internally on the protective plate (16).

6. Bridge according to claim 5, characterised in that the angle (17) is pivotable from an inoperative position (Fig. 7) into the operative position, the flange (18) which forms the projection member passing through the protective plate (16).

7. Bridge according to claims 1, 6 and 7, characterized in that the two flanges (18,20) are pivotally interconnected, but the two flanges may not form with each other an angle which is smaller than substantially 90°.

8. Bridge according to claims 1, 2 and 3, characterized in that the other flange (20) abuts in the inoperative position with its external face against the inside of the protective plate (16) and in the operative position with its internal face against the internal face of the protective plate (16).

9. Bridge according to claim 6, characterized in that the bore (19) or recess in the protective plate (16), provided for a flange (18) to pass therethrough, is closable by a removable cover or slide (25).

## Revendications

1. Niveleur de quai (4) comportant un tablier (1) qui peut basculer à son extrémité côté quai par rapport à un axe (3) horizontal, qui est muni à son extrémité libre d'un prolongement (2) destiné à reposer sur la plate-forme à charger ou à décharger et qui est muni de part et d'autre de tôles (16) protectrices verticales qui, lorsque le tablier (1) est basculé vers le haut, comblent l'intervalle compris entre le tablier (1) et le quai (4), une partie en saillie, qui peut être déplacée, en passant par les tôles (16) protectrices, d'une position de repos, située en arrière des tôles (16) protectrices, à une position active dans laquelle elle dépasse latéralement et dans laquelle, lorsque le tablier (1) est basculé vers le haut, elle repose sur le quai (4) et empêche que le tablier (1) ne s'abaisse sans qu'on le souhaite, étant prévue sur les tôle (16) protectrices, caractérisé en ce que la partie en saillie est formée par une branche (18) d'une cornière (17) dont l'autre branche (20) est montée derrière la tôle (16) protectrice et est fixée de manière amovible.

2. Niveleur de quai suivant la revendication 1, caractérisé en ce qu'il est associé à la branche (20), qui est fixée à la tôle (16) protectrice, un vissage (21) dont l'élément de vissage (écrou) est tourné vers la fosse (5) du quai servant à recevoir le tablier (1).

3. Niveleur de quai suivant la revendication 1, caractérisé en ce que la cornière (17) est une partie d'un fer à cornière de préférence à branches égales, comportant des branches faisant un angle droit l'une avec l'autre.

4. Niveleur de quai suivant la revendication 1, caractérisé en ce qu'il est ménagé, à proximité du bord inférieur des tôles (16) protectrices, un trou (19) ou une cavité de la tôle (16) protectrice prévus pour les branches (18) formant la partie en saillie, de manière que la cornière (17) se trouvant en la position de repos ne dépasse pas de la tôle (16) protectrice ou n'en dépasse pas notablement.

5. Niveleur de quai suivant la revendication 1, caractérisé en ce que la cornière (17) est, à l'extrémité libre de son autre branche (20), articulée intérieurement à la tôle (16) protectrice.

6. Niveleur de quai suivant la revendication 5, caractérisé en ce que la cornière (17) peut être rabattue d'une position de repos (figure 7) à la position active, la branche (18) formant la partie en saillie passant à travers la tôle (16) protectrice.

7. Niveleur de quai suivant la revendication 1, 5 ou 6, caractérisé en ce que les deux branches (18), 20) sont articulées l'une à l'autre, les deux branches ne pouvant cependant pas faire l'une avec l'autre un angle inférieur à 90° environ.

8. Niveleur de quai suivant la revendication 1, 2 ou 3, caractérisé en ce que l'autre branche (20), en la position de repos, s'applique par sa face extérieure à la face intérieure de la tôle (16) protectrice et, en la position active, s'applique par sa face intérieure à la face intérieure de la tôle (16) protectrice.

9. Niveleur de quai suivant la revendication 6, caractérisé en ce que le trou (19) ou la cavité ménagés dans la tôle (16) protectrice pour le passage d'une branche (18) peut être fermée par un capuchon ou un poussoir (25) qui peuvent être retirés.
